# EUROPEAN PATENT APPLICATION

(11) **EP 4 748 705 A1**
(43) Date of publication of application: **27.05.2026**
(21) Application number: 25209977.5
(22) Date of filing: 21.10.2025
(51) Int. Cl.: B64C 3/56, B64C 3/54

(54) **A HARD STOP ARRANGEMENT FOR A FOLDING WING TIP**

(30) Priority: 20.11.2024 GB 202417057
(71) Applicant: Airbus Operations Limited, Bristol BS34 7PA (GB)
(72) Inventor: WHATLING, Samuel, Bristol, BS34 7PA (GB); HIPKISS, Richard, Bristol, BS34 7PA (GB)
(74) Representative: Abel & Imray LLP

(57) **Abstract**

A wing assembly 10 for an aircraft, comprising a fixed wing 18 and a wing tip device 12 rotatable about a joint assembly 16. The wing assembly is configurable between a flight configuration for use during flight and a ground configuration for use during ground-based operations. The wing assembly 10 comprises joint-bordering structure located adjacent the joint assembly 16, the joint-bordering structure comprising a rib 34, an upper cover 26 and a lower cover. The joint assembly comprises a moveable panel 32. The panel 32 comprises a first hard stop element 38a, and the joint-bordering structure comprises a second hard stop element 40a. The first hard stop element 38a is integrally formed in the panel 32, and the second hard stop element 40a is integrally formed in one of the rib 34, the upper cover 26 or the lower cover of the joint-bordering structure. The hard stop elements 38a, 40a may be configured to self-align.

## Description

### BACKGROUND OF THE INVENTION

The present disclosure relates to a wing assembly comprising a fixed wing and a wing tip device rotatable about a joint assembly at the tip of the fixed wing. More specifically, the disclosure relates to such a wing assembly comprising a panel and a hard stop. The present disclosure also relates to an aircraft incorporating such a wing assembly.

It is increasingly desirable to have larger wing spans across all sizes of passenger aircraft as a means to improve fuel efficiency. Particularly for larger aircraft, however, the maximum aircraft span is effectively limited by airport operating rules which govern various clearances required when manoeuvring around the airport (such as the span and/or ground clearance required for gate entry and safe taxiway usage).

Therefore, folding wing tip devices have been introduced into passenger aircraft, where a wing tip device is movable between a flight configuration for use during flight, and a ground configuration for use during ground-based operations. In the ground configuration, the wing tip device is moved away from the flight configuration such that the span of the aircraft wing is reduced, thereby allowing use of existing gates and safe taxiway usage. Such an arrangement is sometimes referred to as a 'folding wing tip'. It will be appreciated that such a term encompasses a range of sizes, and where the hinge is relatively far inboard this may equally be considered a 'folding wing' or 'movable wing'. WO2019/034432 discloses an aircraft with a hinged wing tip device, together with an actuation unit for actuating the foldable wing tip portion.

There tends to be relatively little spare space available in the region of a folding wing tip joint. When a wing tip device is moved relative to the fixed wing, to reach the ground configuration, it may therefore be necessary to avoid clashing between these two structures and/or between internal components in the vicinity of the joint. EP3867146 is second example of a folding wing tip device. The arrangement in EP3867146 comprises a hinged panel at the boundary between the wing tip device and the fixed wing. In the flight configuration the panel is closed such that the panel is substantially flush with the upper surface of the wing, whereas in the ground configuration the panel is hinged open to a position such that clashing between part of the wing tip device and the tip of the fixed wing is avoided.

In folding wing tip arrangements comprising a moveable panel, ensuring the desired wing geometry in the flight configuration (e.g. having an aerodynamically efficient profile with the adjacent surfaces adequately aligned) can be challenging and/or time-consuming to achieve.

The present invention seeks to mitigate the above-mentioned problems. Alternatively or additionally, the present invention seeks to provide an improved wing assembly.

### SUMMARY OF THE INVENTION

According to a first aspect of the invention, there is provided a wing assembly for an aircraft, the wing assembly comprising a fixed wing and a wing tip device rotatable about a joint assembly at the tip of the fixed wing. The wing assembly is configurable between: a flight configuration for use during flight and a ground configuration for use during ground-based operations, in which ground configuration the wing tip device is rotated away from the flight configuration such that the span of the aircraft wing is reduced. The wing assembly comprises a joint-bordering structure located adjacent the joint assembly, the joint-bordering structure comprising a rib, an upper cover and a lower cover. The joint assembly comprises a moveable panel arranged such that, when the wing assembly is in the ground configuration the panel is in an open position to accommodate relative movement between the fixed wing and the wing tip device. When the wing assembly is in the flight configuration the panel is in a closed position, in which closed position, the panel is substantially flush with an adjacent cover of the joint-bordering structure. The panel comprises a first hard stop element, and the joint-bordering structure comprises a second hard stop element. When the panel is in the closed position, the first hard stop element abuts the second hard stop element. The first hard stop element is integrally formed in the panel, and the second hard stop element is integrally formed in one of the rib, the upper cover or the lower cover of the joint-bordering structure.

The provision of a hard stop enables the closed position of the panel to be tightly controlled. In previously-suggested arrangements, one or more hard stop elements are rigged as separate components and attached to the joint-bordering structure. Such an arrangement has been found to present two drawbacks. Firstly, the act of accurately rigging the hard stop (in a position to ensure correct alignment of the panel) can be time-consuming. Secondly, a tolerance stack may accumulate within the separate components of the hard stop. This may be undesirable because it may create an undesirable offset between the panel and the adjacent wing skin surface, thereby impacting the performance of the wing. In embodiments of the invention, the first hard stop element is integrally formed in the panel, and the second hard stop element is integrally formed in one of the rib, the upper cover or the lower cover of the joint-bordering structure. Such an arrangement has been found to be particularly advantageous because it avoids the need to provide separate components to create the hard stop. This may simplify assembly. For example, it removes the need to separately rig a hard stop element in position. The integration of the hard stop elements into the respective components in the wing assembly, may also reduce the risk of an undesirable tolerance stack developing. Enabling the tolerance to be tightly controlled, facilities reliable and high precision positioning between the panel and the surrounding structure, which is especially important in the context of the aerodynamic surface of the wing.

According to embodiments of the invention, the first hard element is integrally formed in the panel, and the second hard stop element is integrally formed in one of the rib, the upper cover or the lower cover of the joint-bordering structure. By being integrally formed, it may be that the first hard stop element and the panel are a monolithic structure. It may be that the first hard stop element is machined into the panel during manufacture of the panel. By being integrally formed, it may be that the second hard stop element and the corresponding joint-bordering structure are a monolithic structure. It may be that the second hard stop element is machined into the corresponding joint-bordering structure during manufacture of that structure.

The panel may comprise a multiplicity of first hard stop elements. In the closed position, the first hard stop elements may each abut a corresponding second hard stop element of the joint-bordering structure. Each of the multiplicity of first hard stop elements may be integrally formed in the panel. Each of the corresponding second hard stop elements may be integrally formed in the rib, the upper cover or the lower cover of the joint-bordering structure.

The joint-bordering structure may comprise a fixed wing joint-bordering structure inboard of the joint assembly. The joint-bordering structure may comprise a wing tip joint-bordering structure outboard of the joint assembly. The fixed wing joint-bordering structure may comprise a tip rib and fixed wing upper and lower covers. The wing tip joint-bordering structure may comprise a root rib and wing tip upper and lower covers. It will be appreciated that in these embodiments, the rib of the joint-bordering structure comprises the tip rib and/or the root rib. It will be appreciated that in these embodiments, the upper and lower cover of the joint-bordering structure, comprises the fixed wing upper and lower covers and/or the wing tip upper and lower covers. In preferred embodiments, a plurality of the second hard stop elements may be integrally formed in one of the wing tip upper or lower covers (of the wing tip joint-bordering structure). In preferred embodiments, a plurality of the second hard stop elements may be integrally formed in one of the fixed wing upper or lower covers (of the fixed wing joint-bordering structure). Embodiments having all of the second hard stop elements integrated into the covers, have been found to be especially beneficial in ensuring high levels of alignment. In some embodiments, a plurality of the second hard stop elements may be integrally formed in the root rib (of the wing tip joint-bordering structure).

The, or each, first hard stop element may be shaped to self-align with the corresponding second hard stop element when the panel is closed. Such an arrangement has been found to be especially beneficial in the context of a panel on a folding wing tip, because it facilitates the correct positioning of the panel and the resulting aerodynamic surface. It has also been found to be surprisingly beneficial in embodiments in which the first and second hard stop elements are integrally formed with their corresponding structures.

It will be appreciated that a number of different arrangements are possible to provide the self-aligning function. The first and second hard stop elements may be shaped to self-align in two mutually orthogonal directions (e.g. to form a point contact). For example the first hard stop element may comprise a spherical strike face, and the second hard stop element may comprise a corresponding cup-shaped surface.

In preferred embodiments, the, or each, first hard stop element is shaped to self-align with the corresponding second hard stop element along a contact line. In embodiments comprising a plurality of first hard stop elements, the first hard stop elements may be orientated such that the contact lines are non-parallel to one another. In preferred embodiments, the panel may comprise three, and preferably only three, first hard stop elements for abutting three corresponding second hard stops elements on one of the fixed wing joint-bordering structure or the wing tip joint-bordering structure. Such an arrangement has been found to be especially beneficial because may enable the panel to be correctly located in all 6 degrees of freedom, whilst also enabling a relatively structurally stable arrangement.

The panel may be actuated to the open position. For example the wing may comprise a panel actuator arranged to move the panel to the open position.

In some embodiments of the invention, the panel may be biased towards the closed position (for example by a biasing member). Such an arrangement may help to keep the panel in the correct position when aero (suction) loads are present during flight. Furthermore, such an arrangement may facilitate the correct alignment at a self-aligning hard stop interface because the biasing force may urge the first hard stop element against the corresponding second hard stop element.

When the panel is in the open position, relative movement between the fixed wing and the wing tip device is accommodated. The relative movement may be between the structures of the fixed wing and the wing tip device. Alternatively or additionally, the relative movement may be between components associated with the fixed wing and/or wing tip device. For example, in the open position the panel may accommodate movement of an actuator relative to the fixed wing or wing tip device. The panel may accommodate movement of a wiring harness relative to the fixed wing or wing tip device.

When the panel is in the closed position, the panel (preferably the outer surface of the panel) is substantially flush with an adjacent cover (preferably the outer surface of the cover) of the joint-bordering structure. The adjacent cover may be the lower cover. The adjacent cover may be the upper cover.

According to embodiments of the invention the wing assembly comprises a first hard stop element and a second hard stop element. Together, the first and second hard stop elements may form a hard stop. The hard stop may comprise a strike face (for example on the first hard stop element) and a fixed face (for example on the second hard stop element). In typical embodiments of the invention, the hard stop strike face is referred to as the part of the hard stop assembly that moves, whereas the fixed face refers to the part that remains generally fixed relative to its surrounding structure, and receives the strike face.

In embodiments of the present invention, the wing tip device is configurable between: (a) a flight configuration for use during flight and (b) a ground configuration for use during ground-based operations, in which ground configuration the wing tip device is moved away from the flight configuration such that the span of the aircraft wing is reduced. In the flight configuration, the span may exceed an airport compatibility limit. In the ground configuration the span may be reduced such that the span (with the wing tip device in the ground configuration) is less than, or substantially equal to, the airport compatibility limit. The airport compatibility limit is a span limit (for example relating to clearance restrictions for buildings, signs, other aircraft). The compatibility limit is preferably a gate limit.

The wing tip device may be a wing tip extension; for example the wing tip device may be a planar tip extension. In other embodiments, the wing tip device may comprise, or consist of, a non-planar device, such as a winglet. The wing tip device may comprise a further wing section having a further movable wing tip device at its distal end. The ordinarily skilled person will be aware of other devices suitable for movably placing at the wing tip. The wing tip device may include, for example, trailing edge moveable devices for control (ailerons) or leading edge devices for stall protection, such as slats or droop nose devices. It will be appreciated that the term 'wing tip device' does not limit the size of that structure. For example, the wing tip device may be a large wing extension, and may equally be considered a secondary, or outboard, wing. The length of the wing tip device may be more than 3m, preferably more than 4m, and more preferably more than 5m.

In the flight configuration the trailing edge of the wing tip device is preferably a continuation of the trailing edge of the fixed wing. The leading edge of the wing tip device is preferably a continuation of the leading edge of the fixed wing. There is preferably a smooth transition from the fixed wing to the wing tip device. It will be appreciated that there may be a smooth transition, even where there are changes in sweep or twist at the junction between the fixed wing and wing tip device. However, there are preferably no discontinuities at the junction between the fixed wing and wing tip device. The upper and the lower surfaces of the wing tip device may be continuations of the upper and lower surfaces of the fixed wing. The span ratio of the fixed wing relative to the wing tip device may be such that the fixed wing comprises at least 50%, 60%, 70%, 80%, or more, of the overall span of the aircraft wing.

When the wing tip device is in the ground configuration, the aircraft incorporating the wing, may be unsuitable for flight. For example, the wing tip device may be aerodynamically and/or structurally unsuitable for flight in the ground configuration. The aircraft is preferably configured such that, during flight, the wing tip device is not movable to the ground configuration. The aircraft may comprise a sensor for sensing when the aircraft is in flight. When the sensor senses that the aircraft is in flight, a control system is preferably arranged to disable the possibility of moving the wing tip device to the ground configuration.

In the ground configuration the wing tip device may be held in place. For example the wing tip device may be latched or locked in place to prevent movement back towards the flight configuration.

The joint assembly wing may comprise an actuation mechanism for moving the wing assembly from the flight configuration to the ground configuration. In some embodiments, the actuation mechanism may comprise a linear drive. In some embodiments, the actuation mechanism may comprise a rotary drive. The rotary drive may be arranged with an axis of rotation that is parallel to a joint axis. The rotary drive mechanism may be arranged with an axis of rotation that is parallel to and coincident with the joint axis. The rotary drive may comprise a geared rotary actuator (GRA). An actuation unit having some of the above-mentioned features of the actuation mechanism, is disclosed in WO2019/034432.

According to yet another aspect of the invention, there is provided a folding wing tip arrangement in an aircraft wing, the arrangement comprising a fixed wing and a wing tip device rotatable about a hinge at the tip of the fixed wing, wherein the wing is configurable between: a flight configuration for use during flight and a ground configuration for use during ground-based operations, in which ground configuration the wing tip device is rotated away from the flight configuration such that the span of the aircraft wing is reduced. Wherein the arrangement comprises a moveable panel arranged such that, when the wing is in the ground configuration the panel is in an open position to accommodate relative movement between the fixed wing and the wing tip device, and when the wing is in the flight configuration the panel is in a closed position, in which closed position, the panel is substantially flush with an adjacent cover on the fixed wing and an adjacent cover on the wing tip device. The panel comprises a multiplicity of hard stop strike faces integrally formed in the panel. A plurality of hard stops elements are integrally formed in a rib at the tip of the fixed wing, and plurality of hard stop elements are integrally formed in the cover at the root of the wing tip device. The wing assembly is arranged such that when the panel is in the closed position, each of the hard stop strike faces abuts a corresponding hard stop element. Each hard stop strike face and each corresponding hard stop element, may be shaped such that the hard stop strike face self-aligns with the corresponding hard stop element, when the panel is closed.

According to another aspect of the invention, there is provided an aircraft incorporating the wing assembly of the first aspect or the folding wing tip arrangement of the second aspect.

The aircraft is preferably a passenger aircraft. The passenger aircraft preferably comprises a passenger cabin comprising a plurality of rows and columns of seat units for accommodating a multiplicity of passengers. The aircraft may have a capacity of at least 20, more preferably at least 50 passengers, and more preferably more than 50 passengers. The aircraft is preferably a powered aircraft. The aircraft preferably comprises an engine for propelling the aircraft. The aircraft may comprise wing-mounted, and preferably underwing, engines.

It will of course be appreciated that features described in relation to one aspect of the present invention may be incorporated into other aspects of the present invention. For example, the method of the invention may incorporate any of the features described with reference to the apparatus of the invention and vice versa.

### DESCRIPTION OF THE DRAWINGS

Embodiments of the present invention will now be described by way of example only with reference to the accompanying schematic drawings of which:
Figure 1a shows a schematic view of an aircraft wing assembly according to a first embodiment of the invention;
Figure 1b shows a schematic view of an aircraft incorporating wings according to Figure 1a;
Figure 2a shows a close-up view of the joint assembly and the joint-bordering structure of the wing assembly in Figure 1a with the wing assembly in the flight configuration;
Figure 2b shows a close-up view of the joint assembly and the joint-bordering structure of the wing assembly in Figure 1a with the wing assembly in the ground configuration;
Figure 3 is a section view through A-A in Figure 2a;
Figure 4 shows the underside of the panel illustrated in Figures 2a, 2b and 3;
Figure 5 is a view of the upper cover of the wing tip device in Figure 2a and 2b, adjacent the joint assembly;
Figure 6 is a sectional view corresponding to that of Figure 3, but for a wing assembly according to a second embodiment of the invention;
Figure 7a to 7d are schematic images showing the self-alignment of a first and second hard stop elements in the second embodiment of the invention;
Figure 8 shows the arrangement of three hard stop elements on the panel in the second embodiment of the invention.

### DETAILED DESCRIPTION

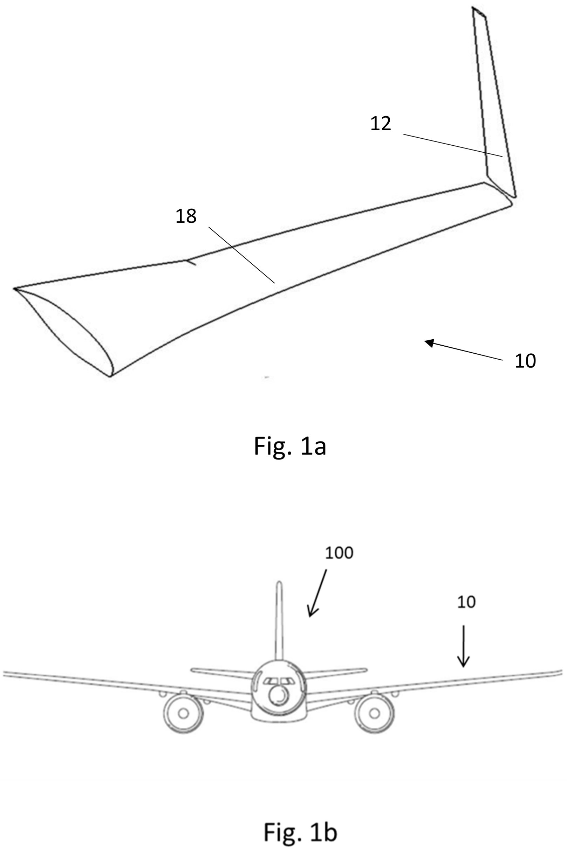

Figure 1a shows a wing assembly 10 comprising a wing tip device 12 and a fixed wing 18. The wing tip device 12 is configurable between: (i) a flight configuration for use during flight, as shown in Figure 1b and (ii) a ground configuration for use during ground-based operations, as shown in Figure 1a, in which ground configuration the wing tip device 12 is moved away from the flight configuration such that the span of the aircraft wing 10 is reduced.

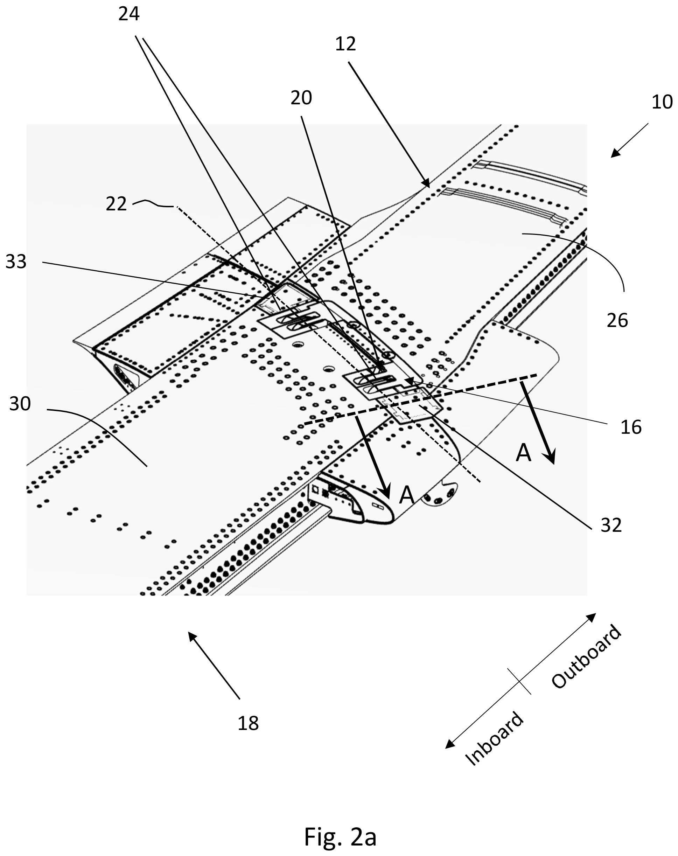

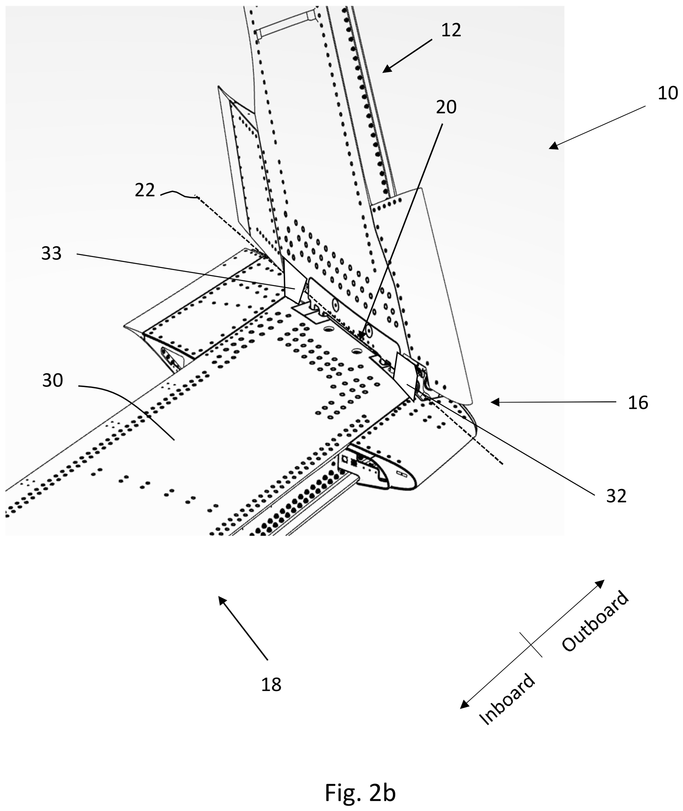

Figures 2a and 2b show part of the wing assembly 10 in the first embodiment of the invention, and reference will now be made to these Figures.

Figures 2a and 2b show close-up views of the joint assembly 16 and of the joint-bordering structure of the wing tip device and fixed wing. Some parts of the leading and trailing edge structures have been removed for the sake of clarity. It will be appreciated that other leading and trailing edge structures extend along the parts of the wing shown in Figures 2a and 2b but these are not relevant to aspects of the present invention.

Referring first to Figure 2a, the wing assembly 10 comprises the wing tip device 12 (on the right-hand side of Figure 2a) and the fixed wing 18 (on the left-hand side of Figure 2a). The wing tip device 12 is hinged to the fixed wing 18 about the joint assembly 16 comprising a hinge 20 having a hinge axis 22. The hinge 20 comprises a series of interleaving lugs 24 on the root of the wing tip device 12 and the tip of the fixed wing 18. The lugs 24 have apertures (not visible in Figure 2a) through which a hinge pin (not shown) extends (the hinge pin being coaxial with the hinge axis 22). The exact nature of the hinge and the associated locking arrangement for holding the wing tip device in the flight configuration is not critical to the present invention and is not described in further detail herein.

The wing tip device 12 comprises an upper cover 26 connected to a wing tip root rib (not visible). The upper cover 26 forms the outer skin on the upper surface of the wing tip device 12.

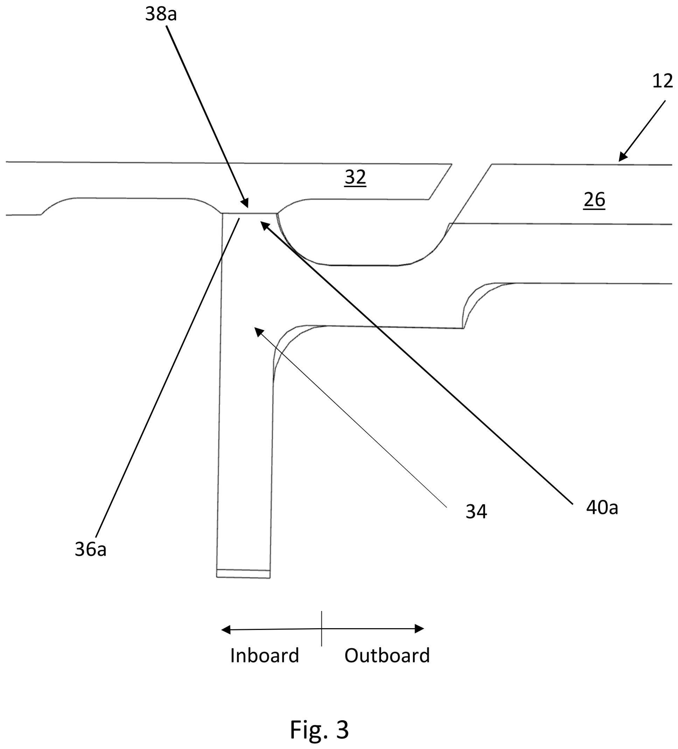

The fixed wing 18 comprises an upper cover 30 connected to a tip rib (see Figure 3). The upper cover 30 forms the outer skin on the upper surface of the fixed wing 18.

The joint assembly 16 comprises a leading edge articulated panel 32, spanning the hinge axis 22 and being located between the fixed wing upper cover 30 and the wing tip upper cover 26. The joint assembly 16 also comprises a trailing edge articulated panel 33, spanning the same structures but towards the trailing edge of the joint. For ease of reference, features of the leading edge articulated panel are described below, but it will be understood that those features apply equally to the trailing edge panel too.

In the flight configuration, the articulated panel 32 is closed and the panel is substantially flush with the surrounding upper surfaces of the covers 26, 30.

Figure 2b shows the wing tip when the wing assembly is moved from the flight configuration to the ground configuration.

In the ground configuration, some of the wing assembly (in this embodiment, the wiring harness extending from the fixed wing into the wing tip device) protrudes beyond the envelope of the wing due to the flex of the harness during movement of the wing tip device. To accommodate the flex, the articulated panels 32 and 33 have been moved to their open positions. Such an arrangement prevents the wiring harness fouling on the surrounding structure, as it would otherwise do within the confines of the wing volume. This enables effective movement of the wing assembly into the ground configuration.

The use of moveable panels to facilitate movement of a folding wing tip is known *per se.* However, the first embodiment of the invention exhibits a hard stop arrangement, associated with each panel 32, 33, that seeks to ensure high precision alignment between the panel and the corresponding surrounding structure. The hard stop arrangement will now be described with reference to Figures 3 to 5.

Figure 3 shows a section view through A-A in Figure 2a. More specifically, Figure 3 shows the interface between the leading edge articulated panel 32 and the root rib 34 of the wing tip device 12, when the panel 32 is closed (and the wing assembly 10 is in the flight configuration). A hard stop strike face 36a of a first hard stop element 38a on the panel 32, abuts a corresponding hard stop element 40 on the root rib 34.

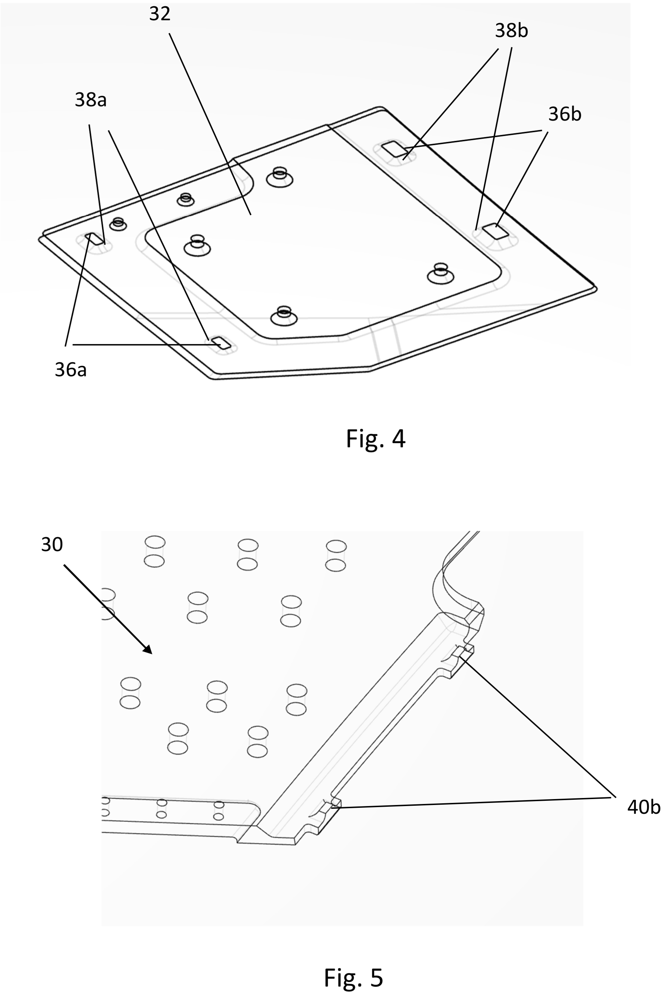

The underside of the panel 32 is shown in Figure 4 and comprises a pair of frustum-shaped hard stop elements 38a, each of which comprises a planar, rectangular, hard stop strike face 36a (only one of the hard stop elements 38a is visible in Figure 3). The hard stop elements 38a are integrally formed into the panel. They were machined into the monolithic panel structure during manufacture of the panel 32.

Two corresponding hard stop elements 40a are also formed in the wing tip root rib 34. Each of these hard stop elements 40a comprises a protrusion on the root rib 34 having a corresponding planar face to receive the hard stop strike face 36a of the hard stop element 38a of the panel 32. Importantly, the hard stop elements 40a are integrally formed in the root rib 34. The hard stop elements were machined as part of the monolithic rib structure during manufacture of the root rib 34.

Such an arrangement has been found to be particularly advantageous because it avoids the need to provide separate components to create the hard stop. This may simplify assembly. For example, it removes the need to separately rig a hard stop element in position on the panel and/or the wing structure. The integration of the hard stop elements into the respective components in the wing assembly, may also reduce the risk of an undesirable tolerance stack developing. Enabling the tolerance to be tightly controlled, facilities reliable and high precision positioning between the panel and the surrounding structure, which is especially important in the context of the aerodynamic surface of the wing.

In the first embodiment of the invention, there is also a novel arrangement of hard stops on the interface between the panel 32 and the joint-bordering structure of the fixed wing 18. Referring back to Figure 4, the opposing edge of the panel 32 also includes an additional pair of hard stop elements 38b. These hard stop elements 38b are also frustum-shaped and comprise a corresponding planar strike face 36b. As with the first pair of elements 38a the hard stop elements 38b are integrally formed with the panel 32 and were machined as part of the monolithic panel structure during manufacture.

The hard stop elements 38b are arranged to abut corresponding hard stop elements 40b on the upper wing cover 30 of the fixed wing 18. Figure 5 is a close-up view of the wing tip upper cover 30 in the vicinity of the panel 32. The cover 30 includes a machined seal-receiving lip, configured to extend below the panel 32. The lip includes a pair of hard stop elements 40b.

When the panel 32 is closed (and the wing assembly 10 is in the flight configuration), the hard stop strike faces 36b of the inboard hard stop elements 38b on the panel 32, abut the corresponding hard stop elements 40b on the upper cover 30 of the fixed wing.

The provision of integral hard stop elements into the panel and the fixed wing upper cover has been found to be especially beneficial in ensuring reliable and high precision positioning between the panel and the cover.

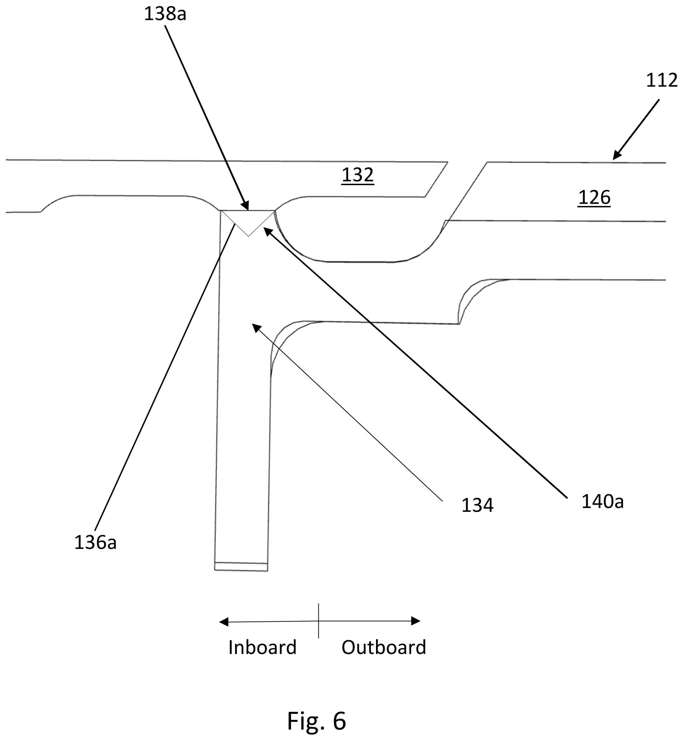

A further embodiment is shown in Figures 6 to 8. Figure 6 is a sectional image corresponding to that in Figure 3, but instead shows the second embodiment of the invention. Like features that are common to the first embodiment are shown using the same reference numerals but incremented by 100. This arrangement in the second embodiment is substantially similar to the previous embodiment, except for the differences described below.

The hard stop element 138a on the panel 132 is in the form of a triangular prism integrally formed in the panel and having two inclined strike faces 136a. Both of the inclined strike faces are lined with a low-friction PTFE layer. When the panel 132 is closed, the strike faces 136a contact a corresponding triangular groove on the hard stop element 140a of the root rib 134. The hard stop elements 138a and 140a are thus shaped such that they self-align as they contact one another. More specifically, they self-align along a contact line at the apex of the triangle shape.

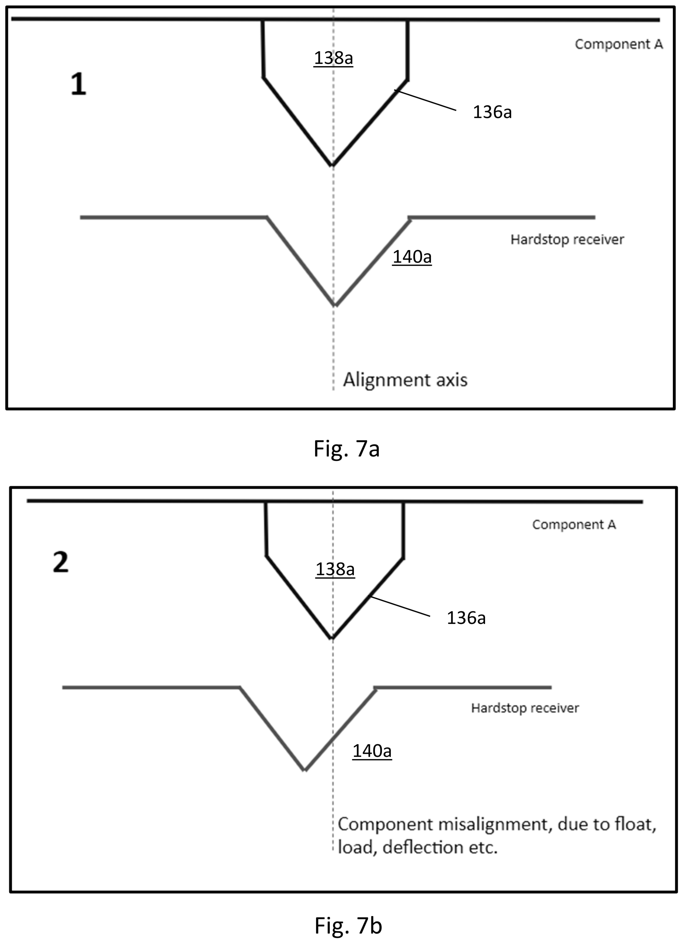

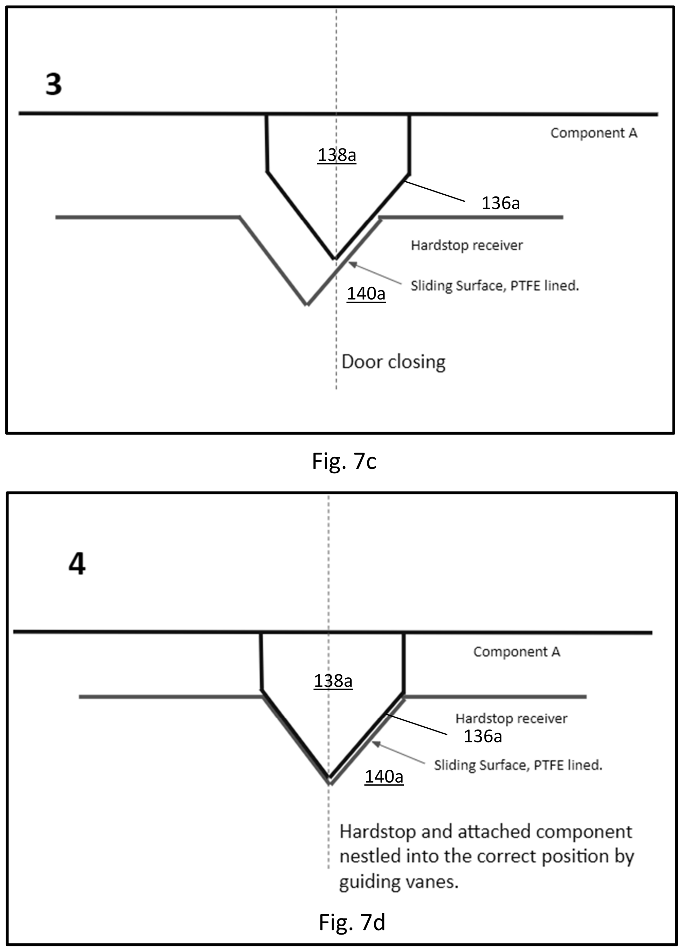

This self-alignment is illustrated schematically in Figures 7a to 7d. These are schematic images showing the self-alignment of the two hard stop elements 138a and 140a of Figure 6. In Figure 7a the panel hard stop element 138a is positioned directly above the rib hard stop element 140a, illustrating an idealised scenario. Figure 7b illustrates a more realistic scenario in which the hard stop 138a is initially slightly offset (for example due to misalignment, float deflection). In this scenario, as the panel moves towards the closed position (Figure 7c) the inclined strike face 136a abuts the fixed face of the hard stop element 140a. The angle of the inclined faces has been chosen to be sufficiently large to create a wide opening that receives the panel hard stop element 138a in a range of likely offset positions, yet sufficiently low to also ensure that the panel hard stop element will slide along the inclined surface as the two elements 138a and 140a are drawn together.

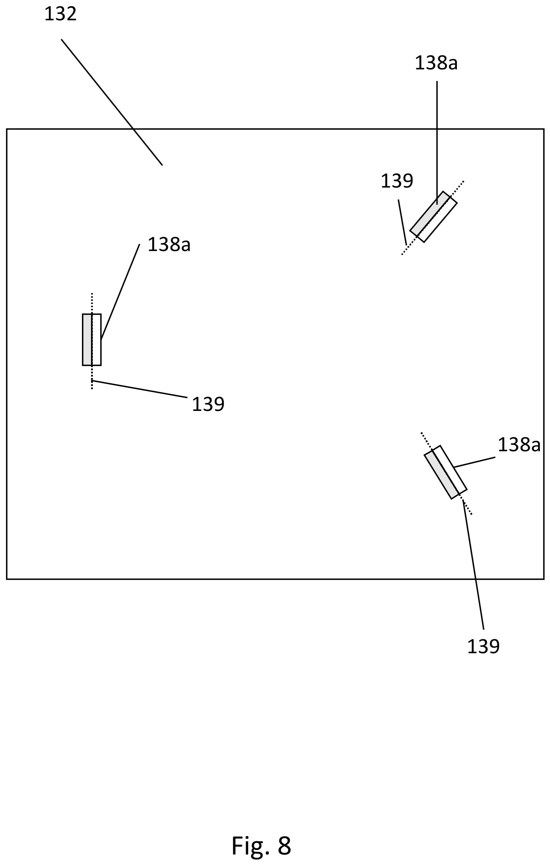

By virtue of the inclined faces, movement of the panel 132 to the closed position, ensures that the panel hard stop element 138a is drawn down into alignment, forming a contact line 139 (see Figure 8) along the apex of the common triangular shape.

In the second embodiment of the invention, the panel 132 comprises three hard stop elements 138a that are arranged to contact three corresponding hard stop elements 140a on the fixed wing and wing tip device. These are identical in structure (i.e. all triangular prisms and corresponding triangular grooves). However, each of the hard stop pairs are orientated at 120 degrees to one another. This is illustrated in Figure 8.

Such an arrangement has been found to be especially advantageous because it enables the panel to be located in 6 degrees of freedom. Furthermore, using the three hard stops create a relatively stable structural arrangement for the panel.

In the second embodiment of the invention, the panel 134 is biased by a spring (not shown) that pulls and biases the panel into the closed position. Such an arrangement is beneficial in combination with the self-aligning hard stops because it ensures the panel 132 is drawn down into the aligned, closed, position.

Although only the arrangement between the panel 132 and the rib 134 has been described with reference to the second embodiment, the hard stop between the panel and the fixed wing upper cover also includes a corresponding self-aligning arrangement.

Whilst the present invention has been described and illustrated with reference to particular embodiments, it will be appreciated by those of ordinary skill in the art that the invention lends itself to many different variations not specifically illustrated herein. For example, in some arrangements other self-aligning hard stops may be envisaged, such as a ball and cup arrangement. In some embodiments, the hard stop element my be integral to another part of the joint-bordering structure (for example on a cover of the fixed wing, or on a rib of the wing tip device). In some embodiments, all of the hard stops may be integrated into the covers, and there may not necessarily be hard stops integrated into the ribs. Such an arrangement has been found to be especially beneficial in ensuring high levels of alignment because it tends to be the covers that define the final desired aerodynamic profile.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

The term 'or' shall be interpreted as 'and/or' unless the context requires otherwise.

## Claims

1. A wing assembly for an aircraft, the wing assembly comprising a fixed wing and a wing tip device rotatable about a joint assembly at the tip of the fixed wing,
wherein the wing assembly is configurable between:
(i) a flight configuration for use during flight and
(ii) a ground configuration for use during ground-based operations, in which ground configuration the wing tip device is rotated away from the flight configuration such that the span of the aircraft wing is reduced,
wherein the wing assembly comprises a joint-bordering structure located adjacent the joint assembly, the joint-bordering structure comprising a rib, an upper cover and a lower cover,
wherein the joint assembly comprises a moveable panel arranged such that, when the wing assembly is in the ground configuration the panel is in an open position to accommodate relative movement between the fixed wing and the wing tip device, and when the wing assembly is in the flight configuration the panel is in a closed position, in which closed position, the panel is substantially flush with an adjacent cover of the joint-bordering structure,
wherein the panel comprises a first hard stop element, and the joint-bordering structure comprises a second hard stop element,
wherein when the panel is in the closed position, the first hard stop element abuts the second hard stop element, and
wherein the first hard stop element is integrally formed in the panel, and the second hard stop element is integrally formed in one of the rib, the upper cover or the lower cover of the joint-bordering structure.

2. A wing assembly according to any of claim 1, wherein the panel comprises a multiplicity of first hard stop elements and in the closed position, the first hard stop elements each abut a corresponding second hard stop element of the joint-bordering structure,
wherein each of the first hard stop elements is integrally formed in the panel, and each of the corresponding second hard stop elements is integrally formed in the rib, the upper cover or the lower cover of the joint-bordering structure.

3. A wing assembly according to claim 2, wherein the joint-bordering structure comprises a fixed wing joint-bordering structure inboard of the joint assembly and a wing tip joint-bordering structure outboard of the joint assembly,
wherein the fixed wing joint-bordering structure comprises a tip rib and fixed wing upper and lower covers, and the wing tip joint-bordering structure comprises a root rib and wing tip upper and lower covers,
and wherein a plurality of the second hard stop elements are integrally formed in the root rib of the wing tip joint-bordering structure, and a plurality of the second hard stop elements are integrally formed in the fixed wing upper cover of the fixed wing joint-bordering structure.

4. A wing assembly according to claims 2 or 3, wherein each of the first hard stop elements is shaped to self-align with the corresponding second hard stop element when the panel is closed.

5. A wing assembly according to claim 4, wherein each of the first hard stop elements is shaped to self-align with the corresponding second hard stop element along a contact line, and wherein the first hard stop elements are orientated such that the contact lines are non-parallel to one another.

6. A wing assembly according to claim 5, wherein the panel comprises three first hard stop elements for abutting three corresponding second hard stop elements on one of the fixed wing joint-bordering structure or the wing tip joint-bordering structure.

7. A wing assembly according to any of claims 4 to 6, wherein the panel is biased into the closed position by a biasing force.

8. A folding wing tip arrangement in an aircraft wing, the arrangement comprising a fixed wing and a wing tip device rotatable about a hinge at the tip of the fixed wing,
wherein the wing is configurable between:
(i) a flight configuration for use during flight and
(ii) a ground configuration for use during ground-based operations, in which ground configuration the wing tip device is rotated away from the flight configuration such that the span of the aircraft wing is reduced,
wherein the arrangement comprises a moveable panel arranged such that, when the wing is in the ground configuration the panel is in an open position to accommodate relative movement between the fixed wing and the wing tip device, and when the wing is in the flight configuration the panel is in a closed position, in which closed position, the panel is substantially flush with an adjacent cover on the fixed wing and an adjacent cover on the wing tip device,
wherein the panel comprises a multiplicity of hard stop strike faces integrally formed in the panel,
and wherein a plurality of hard stops elements are integrally formed in a rib at the tip of the fixed wing, and plurality of hard stop elements are integrally formed in the cover at the root of the wing tip device,
the wing assembly being arranged such that when the panel is in the closed position, each of the hard stop strike faces abuts a corresponding hard stop element,
and wherein each hard stop strike face and each corresponding hard stop element, is shaped such that the hard stop strike face self-aligns with the corresponding hard stop element, when the panel is closed.

9. An aircraft incorporating the wing assembly according to any of claims 1 to 7, or incorporating the folding wing tip arrangement of claim 8.
